Europäisches Patentamt

European Patent Office

Office européen des brevets

(11) Numéro de publication: **0 299 840 B1**

# FASCICULE DE BREVET EUROPEEN

(45) Date de publication de fascicule du brevet: **19.05.93**  (51) Int. Cl.⁵: **G06E 3/00**

(21) Numéro de dépôt: **88401726.0**

(22) Date de dépôt: **04.07.88**

(54) **Corrélateur à fibre optique.**

(30) Priorité: **17.07.87 FR 8710120**

(43) Date de publication de la demande:
**18.01.89 Bulletin 89/03**

(45) Mention de la délivrance du brevet:
**19.05.93 Bulletin 93/20**

(84) Etats contractants désignés:
**DE GB IT NL SE**

(56) Documents cités:

**APPLIED PHYSICS LETTERS, vol. 42, no. 7, avril 1983, pages 556–558, American Institute of Physics, New York, US; K.P. JACKSON et al.: "1–Gbit/s code generator and matched filter using an optical fiber tapped delay line"**

**APPLIED PHYSICS LETTERS, vol. 36, no. 4, 15 février 1980, pages 253–255, American Institute of Physics, New York, US; R. NORMANDIN et al.: "Picosecond signal processing with planar, nonlinear integrated optics"**

(73) Titulaire: **THOMSON–CSF**
**51, Esplanade du Général de Gaulle**
**F–92800 Puteaux(FR)**

(72) Inventeur: **Pocholle, Jean–Paul**
**THOMSON – CSF SCPI – 19, avenue de Messine**
**F–75008 Paris(FR)**
Inventeur: **Papuchon, Michel**
**THOMSON – CSF SCPI – 19, avenue de Messine**
**F–75008 Paris(FR)**
Inventeur: **Puech, Claude**
**THOMSON – CSF SCPI – 19, avenue de Messine**
**F–75008 Paris(FR)**
Inventeur: **Tournois, Pierre**
**THOMSON – CSF SCPI – 19, avenue de Messine**
**F–75008 Paris(FR)**

(74) Mandataire: **Guérin, Michel et al**
**THOMSON–CSF, SCPI, B.P. 329, 50, rue Jean–Pierre Timbaud**
**F–92402 Courbevoie Cédex (FR)**

## Description

L'invention concerne un corrélateur à fibre optique, pour fournir un signal électrique traduisant la corrélation de deux signaux électriques à corréler, par exemple une impulsion reçue par un radar et une impulsion de référence.

Dans le domaine du radar, il est connu de réaliser la corrélation de deux signaux avec un retard de l'ordre de 10 à 100 nanosecondes, au moyen de portes logiques et de lignes à retard, mais cette technique devient très délicate pour des retards de l'ordre de 10 nanosecondes et elle devient impossible à utiliser pour des retards très inférieurs à 10 nanosecondes.

Il est connu de réaliser un corrélation optique, pour des retards extrêmement petits, de l'ordre de 100 picosecondes, au moyen d'un dispositif comportant :

- une première et une seconde diode laser émettant sur une même fréquence et avec une amplitude modulée respectivement par les deux signaux à corréler ;
- un guide optique réalisé dans un cristal de $LiNbO_3$ et dont les deux extrémités sont respectivement couplées aux deux diodes lasers ;
- un photomultiplicateur pour recueillir la seconde harmonique émise par le cristal, l'intensité de cette seconde harmonique traduisant la corrélation entre les deux signaux modulant la lumière des deux diodes lasers respectivement.

Un tel dispositif est décrit par : R. NORMANDIN, et G.I. STEGEMAN dans "Picosecond signal processing with planar, non linear integrated optics" Appl. Phys. Lett. 36 (4), 15 Feb.1980, p.253 ; et par : P.J. VELLA, R. NORMANDIN, G.I. STEGEMAN dans "Enhanced second harmonic generation by counter‒propagating guided optical waves" Appl. Phys. Lett. 38 (10), 15 May 1981, p.759.

Un monocristal de $LiNbO_3$ ne peut avoir plus de quelques centimètres de longueur. Il permet d'envisager la corrélation entre deux signaux pour des retards inférieurs à 1 nanoseconde voire même de l'ordre de la picoseconde, mais ne convient pas dans le domaine de 1 nanoseconde à 10 nanosecondes, car la longueur du cristal réalisable n'est pas suffisante pour être égale à la longueur correspondant à la durée propagation d'une impulsion lorsque cette durée est supérieure ou égale à 1 nanoseconde.

Le but de l'invention est de réaliser un corrélateur permettant de corréler deux signaux constitués d'impulsions ayant une durée de l'ordre de 1 à 10 nanosecondes. L'objet de l'invention est un corrélateur comportant une fibre optique dans laquelle se propage en sens opposés deux signaux lumineux traduisant les deux signaux électriques à corréler, cette fibre optique comportant un méplat en contact avec la surface d'une couche mince de matériau non linéaire, pour émettre une seconde harmonique dont l'amplitude traduit l'intégrale de corrélation des deux signaux.

Selon l'invention, un corrélateur à fibre optique comportant un premier et un second laser émettant avec une même fréquence et avec une amplitude modulée respectivement par un premier et un second signal à corréler, caractérisé en ce qu'il comporte également

- une fibre optique dont les deux extrémités sont respectivement couplées aux deux lasers et dont la longueur est au moins égale à la longueur correspondant à la durée maximale des signaux à corréler, et qui comporte sur toute sa longueur une partie dont le diamètre est réduit pour laisser passer une onde évanescente associée au mode guidé, ladite fibre comportant un coeur d'indice n1 et une gaine d'indice n2 ;
- une couche de matériaux de type non centro‒symétrique en contact avec la partie dont le diamètre est réduit, tout le long de la fibre et possédant un indice inférieur ou égal à celui n1 du coeur de la fibre et supérieur ou égal à celui n2 de la gaine ;
- des moyens pour recueillir la lumière émise par la couche à une fréquence double de la fréquence des deux lasers, et pour fournir un signal électrique fonction de l'intensité de ladite lumière, ce signal électrique traduisant l'intégrale de corrélation des deux signaux à corréler.

L'invention sera mieux comprise et d'autres détails apparaîtront à l'aide de la description ci‒dessous et des figures l'accompagnant :

- La figure 1 représente schématiquement un exemple de réalisation du corrélateur selon l'invention ;
- La figure 2 représente de manière plus détaillée une partie de cet exemple de réalisation ;
- La figure 3 représente des graphes illustrant le fonctionnement de plusieurs variantes de cet exemple de réalisation.

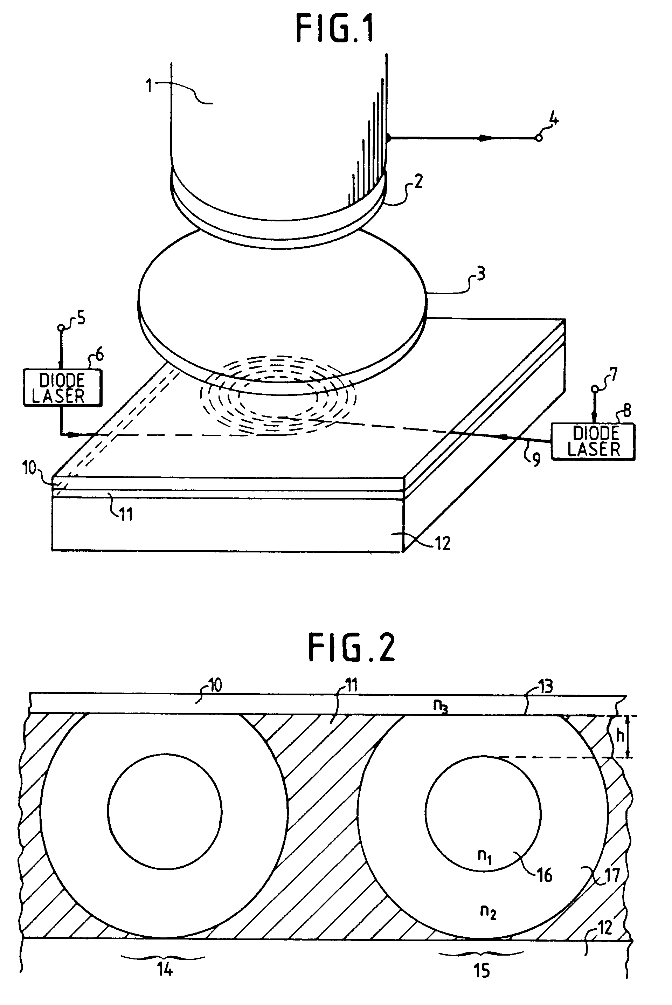

Sur la figure 1, l'exemple de réalisation représenté comporte : deux bornes d'entrée, 5 et 7, pour les signaux électriques à corréler ; deux diodes laser, 6 et 8, émettant sur une même fréquence et avec une amplitude modulée respectivement par les deux signaux à corréler ; une fibre optique monomode 9 dont les deux extrémités sont couplées respectivement aux deux diodes laser 6 et 8 ; un support plan 12 sur lequel la fibre optique 9 est lovée en spires concentriques ; une couche mince 10 de matériau de type non centro-symétrique, la fibre optique 9 étant collée en sandwich entre le support 12 et la couche 10 ; une lentille 3 surmontant la couche 10 pour recueillir la lumière émise par celle-ci ; un filtre 2 filtrant la seconde harmonique ; un photomultiplicateur 1 recevant la seconde harmonique transmise par le filtre 2 ; et une borne de sortie 4 fournissant un signal électrique issu du photomultiplicateur 1 et traduisant l'intégrale de corrélation des deux signaux à corréler.

La figure 2 montre une coupe d'une partie de cet exemple de réalisation, montrant deux spires, 14 et 15, de la fibre 9 lovée entre la couche 10 de matériau non centro-symétrique et le support 12. La fibre 9 comporte sur toute sa longueur un méplat 13 réalisé par un polissage de la gaine 17 afin d'accéder à la partie évanescente du mode guidé. Le méplat 13 est en contact, sur toute sa longueur, avec la surface de la couche 10. L'espace entre les spires 14 et 15 est rempli par un liquide ayant un indice de réfraction intermédiaire entre les indices, $n_1$ et $n_2$, respectivement du coeur 16 et de la gaine 17 de la fibre 9, cet indice étant égal par exemple à $(n_1.n_2)^{\frac{1}{2}}$. La couche 10 a un indice $n_3$ qui doit être inférieur ou égal à l'indice $n_1$ et qui doit être supérieur ou égal à l'indice $n_2$.

Le méplat 13 permet à l'onde évanescente associée au mode guidé d'interagir avec le matériau non linéaire de la couche 10. Selon une variante de réalisation le méplat 13 peut être remplacé par une suppression uniforme d'une partie de l'épaisseur de la gaine 17 de la fibre 9, une réduction du diamètre externe de la gaine 17 de la fibre optique étant réalisée au moyen d'une attaque chimique.

Dans cet exemple les deux diodes lasers émettent dans le domaine du proche infrarouge, à une longueur d'onde de 1,06 micron par exemple ; et la longueur de la fibre 9 est de 20 mètres, ce qui permet une corrélation de deux signaux constitués d'impulsions ayant une durée de 96 nanosecondes, compte tenu des paramètres optogéométriques de la fibre utilisée et compte tenu de la distance h séparant l'interface de la gaine 17 et du coeur 16, et la couche 10 de matériau non linéaire.

Les faibles pertes de transmission dans une fibre monomode permettent donc d'envisager des longueurs importantes correspondant à des durées d'impulsions de l'ordre de 100 nanosecondes, aussi bien que des durées d'impulsion de l'ordre de 1 nanoseconde, celle-ci correspondant à une longueur de propagation de 30 centimètres environ dans une fibre optique.

Dans cet exemple la couche 10 de matériau non linéaire est constituée de préférence par un cristal de 2-diméthyl 4-nitroaniline, appelé aussi MNA, ayant une épaisseur de quelques microns.

Il est possible aussi de constituer la couche 10 par une couche de Langmuir-Blodgett, capable de produire une seconde harmonique dans une direction perpendiculaire au plan de la couche 10 lorsque l'onde lumineuse arrive sur cette couche, dans cette direction. Ce type de couche 10 présente l'avantage d'être beaucoup plus facile à fabriquer qu'une couche de matériau monocristalin telle que le MNA.

En modélisant le comportement des matériaux il est possible d'évaluer la puissance de la seconde harmonique pouvant être produite lors de la corrélation entre deux signaux lumineux se propageant en sens opposé dans la fibre optique 9. En prenant pour hypothèse que le matériau non linéaire déposé sur le méplat 13 présente un indice optique identique à celui de la gaine 17 de la fibre 9, et en négligeant les effets d'interférence sur l'onde harmonique générée dans la couche 10, parce qu'elle est très mince, on peut montrer que la puissance de la seconde harmonique est donnée par la formule simplifiée :

$$P^{(2\omega)}(t) = c_{NL}.P_+^{(\omega)}.P_-^{(\omega)}.U(t) \qquad (1)$$

$$(W) \qquad (W^{-1}m^{-1})\ (W)\ (W) \qquad (m)$$

dans laquelle le coefficient $C_{NL}$ dépend des caractéristiques optogéométriques de la fibre 9, du méplat 13, et du coefficient non linéaire associé au matériau de la couche 10 ; $P_+^{(\omega)}$ et $P_-^{(\omega)}$ sont les puissances émises par les deux diodes lasers 6 et 8 ; et U(t) est égal à :

$$U(t) = \int_{-L/2}^{L/2} \left| U_+(t-\frac{x}{V_g}).U_-(t+\frac{x}{V_g}) \right|^2 .dx \quad (2)$$

où $U_+(t)$ et $U_-(t)$ sont les profils temporels des deux signaux à corréler ; $V_g$ est la vitesse de groupe dans la fibre 9 ; et L est la longueur de la fibre 9.

Si l'on compare les formules (1) et (2) à la formule donnant la valeur U'(t) d'un signal traduisant l'intégrale de corrélation des signaux U+(t) et U−(t) :

$$U'(t) = Vg \left| \int_{\infty}^{\infty} U_+(2t - \tau).U_-(\tau) \right|^2 .d\tau \qquad (3)$$

avec $\tau = t + \frac{x}{Vg}$ (4)

Il apparaît que la puissance de la seconde harmonique est proportionnelle à l'intégrale de corrélation des signaux émis aux deux extrémités de la fibre 9, avec un facteur 2 de compression du temps, lié à la vitesse relative des impulsions puisqu'elles interagissent en se propageant en sens opposés.

Les matériaux non linéaires présentent en général un indice optique plus élevé que celui de la gaine 17 de la fibre 9, avec cependant une exception : les matériaux de type organique. Dans le cas où le matériau non linéaire a un indice plus élevé que celui de la gaine 17, une modélisation plus élaborée permettrait aussi de calculer la puissance de la seconde harmonique.

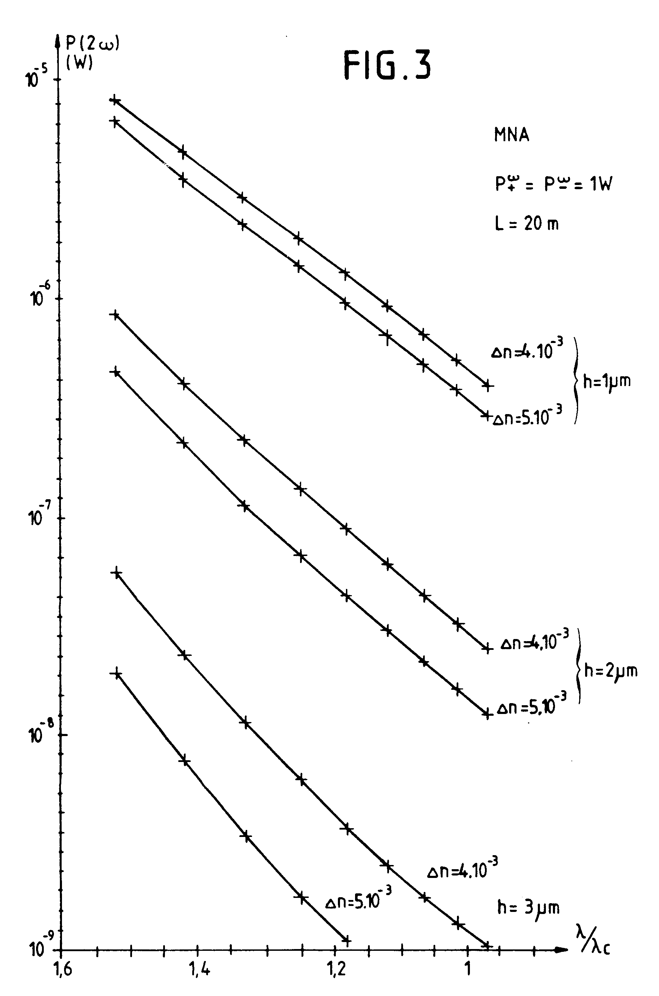

La figure 3 représente le graphe de la puissance $P^{(2\omega)}$ de la seconde harmonique produite dans un exemple de réalisation où la couche 10 est constituée de MNA ; où la puissance émise par chacune des diodes lasers, 6 et 8, est égale à 1 watt ; où la longueur de la fibre est égale à 20 mètres ; pour différentes valeurs de la différence d'indice $\Delta n = n_2 - n_1$ ; et pour différentes valeurs de la distance h entre le méplat 13 et l'interface du coeur 16 et de la gaine 17 de la fibre.

La puissance de la seconde harmonique est de l'ordre $10^{-5}$ watts pour une distance h de 1 micron et une longueur d'onde $\lambda$ telle que $\lambda/\lambda_c$ est égal à 1,53, où $\lambda_c$ est la longueur d'onde de coupure de la fibre 9. Le rendement du dispositif diminue quand $\lambda/\lambda_c$ diminue ou quand la distance h augmente, ou quand la différence d'indice $\Delta n$ augmente.

Le dispositif selon l'invention est utilisable pour de nombreux traitements de signaux, notamment dans le domaine du radar.

**Revendications**

1. Corrélateur à fibre optique, comportant un premier et un second laser (6, 8) émettant avec une même fréquence, et avec une amplitude modulée respectivement par un premier et un second signal à corréler ;
   caractérisé en ce qu'il comporte également :
   - une fibre optique (9) dont les deux extrémités sont respectivement couplées aux deux lasers (6, 8) et dont la longueur est au moins égale à la longueur correspondant à la durée maximale des signaux à corréler, et qui comporte sur toute sa longueur une partie (13) dont le diamètre est réduit pour laisser passer une onde évanescente associée au mode guidé, ladite fibre (9) comportant un coeur d'indice n1 et une gaine d'indice n2 ;
   - une couche (10) de matériaux de type non centro − symétrique en contact avec la partie (13) dont le diamètre est réduit tout le long de la fibre (9) et possédant un indice n3 inférieur ou égal à celui du coeur de la fibre n1 et supérieur ou égal à celui de la gaine n2 ;
   - des moyens (1 à 3) pour recueillir la lumière émise par la couche (10) à une fréquence double de la fréquence des deux lasers (6, 8) et pour fournir un signal électrique fonction de l'intensité de ladite lumière, ce signal électrique traduisant l'intégrale de corrélation des deux signaux à corréler.

2. Corrélateur selon la revendication 1, caractérisé en ce que le matériau de type non centro − symétrique est constitué de 2 − diméthyl 4 − nitro − aniline, dit MNA.

3. Corrélateur selon la revendication 1 caractérisé en ce que la couche (10) de matériau de type non centro − symétrique est une couche de Langmuir − Blodgett capable de produire une seconde harmo − nique dans une direction perpendiculaire au plan de la couche (10) lorsqu'une onde lumineuse arrive sur cette couche, dans cette direction.

4. Corrélateur selon la revendication 1, caractérisé en ce que la partie (13) dont le diamètre est réduit, est un méplat, façonné par un polissage.

**5.** Corrélateur selon la revendication 1, caractérisé en ce que la partie (13) dont le diamètre est réduit, est une partie circulaire, située tout autour de la fibre (9) et enlevée par une attaque chimique.

## Claims

**1.** A fibre – optic correlator, comprising a first and a second laser (6, 8) transmitting at the same frequency, and with an amplitude modulated respectively by a first and a second signal to be correlated;

characterised in that it also comprises:
- an optical fibre (9), the two ends of which are coupled respectively to two lasers (6, 8) and the length of which is at least equal to the length corresponding to the maximum duration of the signals to be correlated, and which comprises over its whole length a portion (13) the diameter of which is reduced to allow an evanescent wave associated with the guided mode to pass, said fibre (9) comprising a core with an index $n_1$ and a sheath with an index $n_2$;
- a layer (10) of materials of non centro – symmetrical type in contact with the portion (13) having a reduced diameter, over the whole length of the fibre (9) and having an index $n_3$ less than or equal to that of the core of the fibre $n_1$ and greater than or equal to that of the sheath $n_2$;
- means (1 to 3) for collecting the light emitted by the layer (10) at a frequency double the frequency of the two lasers (6, 8) and for supplying an electrical signal as a function of the intensity of said light, this electrical signal expressing the correlation integral of the two signals to be correlated.

**2.** A correlator according to claim 1, characterised in that the material of non centro – symmetrical type is composed of 2 – dimethyl 4 – nitro – aniline, known as MNA.

**3.** A correlator according to claim 1 characterised in that the layer (10) of material of non centro – symmetrical type is a Langmuir – Blodgett layer capable of producing a second harmonic in a direction perpendicular to the plane of the layer (10) when a light wave arrives at this layer, in this direction.

**4.** A correlator according to claim 1, characterised in that the portion (13) having a reduced diameter is a flat surface, shaped by polishing.

**5.** A correlator according to claim 1, characterised in that the portion (13) having a reduced diameter is a circular portion, situated around the whole fibre (9) and removed by chemical attack.

## Patentansprüche

**1.** Lichtleitfaser – Korrelator mit einem ersten und einem zweiten Laser (6, 8), die Licht mit gleicher Frequenz und einer Amplitude aussenden, die von einem ersten bzw. zweiten miteinander zu korrelie – renden Signal moduliert ist, dadurch gekennzeichnet, daß der Korrelator außerdem aufweist:
- eine Lichtleitfaser (8), deren beide Enden an je einen der Laser (6, 8) gekoppelt sind und deren Länge mindestens gleich der Länge entsprechend der maximalen Dauer der zu korrelierenden Signale gewählt ist, wobei die Lichtleitfaser über ihre ganze Länge einen Bereich verringerten Durchmessers (13) besitzt, um eine austretende Welle, die dem geführten Modus zugeordnet ist, durchzulassen, und wobei die Faser (9) einen Kern mit einem Index n1 und einer Hülle mit einem Index n2 besitzt,
- eine Schicht (10) aus nicht zentrosymmetrischem Material in Kontakt mit dem Bereich (13) reduzierten Durchmessers über die ganze Länge der Faser (9), wobei diese Schicht einen Brechungsindex n3 höchstens gleich dem Index n1 des Kerns der Faser und mindestens gleich dem Index n2 der Hülle besitzt,
- Mittel (1 bis 3), um das von der Schicht (10) bei der doppelten Frequenz bezüglich der Sendefrequenz der beiden Laser (6, 8) ausgesandte Licht aufzufangen und ein elektrisches Signal abhängig von der Intensität dieses Lichts zu liefern, wobei dieses elektrische Signal das Korrelationsintegral der beiden zu korrelierende Signale wiedergibt.

**2.** Korrelator nach Anspruch 1, dadurch gekennzeichnet, daß das nicht zentrosymmetrische Material aus 2 – Dimethyl 4 – Nitroanilin (MNA genannt) besteht.

**3.** Korrelator nach Anspruch 1, dadurch gekennzeichnet, daß die Schicht (10) aus nicht zentrosymmetri − schem Material eine Langmuir − Blodgett − Schicht ist, die eine zweite Harmonische in einer Richtung senkrecht zur Ebene der Schicht (10) erzeugen kann, wenn eine Lichtwelle in dieser Richtung an der Schicht ankommt.

**4.** Korrelator nach Anspruch 1, dadurch gekennzeichnet, daß der Bereich (13) mit verringertem Durch − messer ein Flachbereich ist, der durch Polieren erhalten wurde.

**5.** Korrelator nach Anspruch 1, dadurch gekennzeichnet, daß der Bereich (13) mit verringertem Durch − messer ein Bereich mit kreisförmigem Querschnitt ist, wobei die Verringerung sich über den ganzen Umfang der Faser (9) erstreckt und durch chemischen Angriff erzeugt wurde.

# FIG.1

# FIG.2

FIG.3